# EUROPEAN PATENT APPLICATION

(11) **EP 4 752 746 A1**
(43) Date of publication of application: **03.06.2026**
(21) Application number: 25218880.0
(22) Date of filing: 26.11.2025
(51) Int. Cl.: G06F 16/242

(54) **GENERATING MULTI-STAGE DATA ANALYSIS IN RESPONSE TO NATURAL LANGUAGE INSTRUCTIONS**

(30) Priority: 27.11.2024 US 202463725991 P; 28.04.2025 US 202519191827
(71) Applicant: Sigma Computing, Inc., San Francisco, CA 94105 (US)
(72) Inventor: WOOLLEN, Robert C., San Francisco, 94105 (US); TEXIER, Jeremie E., San Francisco, 94105 (US); DELVALLE, Stephen J., San Francisco, 94105 (US)
(74) Representative: FRKelly

(57) **Abstract**

Generating multi-stage data analysis in response to natural language instructions including receiving, by a workbook manager from a client computing system, a natural language instruction about a cloud-based data warehouse; retrieving, by the workbook manager from an application programming interface (API) provider using the natural language instruction, a selection of a stage agent from a plurality of stage agents, wherein each stage agent of the plurality of stage agents comprises a group of steps for responding to a particular type of inquiry, and wherein data from the cloud-based data warehouse is an initial stage result; and generating, by the workbook manager, a multi-stage response to the natural language instruction using the selected stage agent.

## Description

### BACKGROUND

### Field Of The Invention

The field of the invention is data processing, or, more specifically, methods, apparatus, and products for generating multi-stage data analysis in response to natural language instructions.

### Description Of Related Art

Modern businesses may store large amounts of data in remote databases within cloud-based data warehouses. This data may be accessed using database statement languages, such as structured query language (SQL). Manipulating the data stored in the database may require constructing complex queries beyond the abilities of most users. Further, composing and issuing database queries efficiently may also be beyond the abilities of most users.

### SUMMARY

Methods, systems, and apparatus for generating multi-stage data analysis in response to natural language instructions including receiving, by a workbook manager from a client computing system, a natural language instruction about a cloud-based data warehouse; retrieving, by the workbook manager from an application programming interface (API) provider using the natural language instruction, a selection of a stage agent from a plurality of stage agents, wherein each stage agent of the plurality of stage agents comprises a group of steps for responding to a particular type of inquiry, and wherein data from the cloud-based data warehouse is an initial stage result; and generating, by the workbook manager, a multi-stage response to the natural language instruction using the selected stage agent, including, for each stage of the multi-stage response: receiving API results from the API provider based on the stage agent and a previous stage result; generating a current stage result using the API results and data from the cloud-based data warehouse; and presenting the current stage result on the client computing system.

The foregoing and other objects, features and advantages of the invention will be apparent from the following more particular descriptions of exemplary embodiments of the invention as illustrated in the accompanying drawings wherein like reference numbers generally represent like parts of exemplary embodiments of the invention.

### BRIEF DESCRIPTION OF THE DRAWINGS

Figure 1 sets forth a block diagram of an example system configured for generating multi-stage data analysis in response to natural language instructions according to embodiments of the present invention.
Figure 2 sets forth a block diagram of an example system configured for generating multi-stage data analysis in response to natural language instructions according to embodiments of the present invention.
Figure 3 sets forth a block diagram of an example system configured for generating multi-stage data analysis in response to natural language instructions according to embodiments of the present invention.
Figure 4 sets forth a block diagram of an example system configured for generating multi-stage data analysis in response to natural language instructions according to embodiments of the present invention.
Figure 5 sets forth a flow chart illustrating an exemplary method for generating multi-stage data analysis in response to natural language instructions according to embodiments of the present invention.
Figure 6 sets forth a flow chart illustrating an exemplary method for generating multi-stage data analysis in response to natural language instructions according to embodiments of the present invention.
Figure 7 sets forth a flow chart illustrating an exemplary method for generating multi-stage data analysis in response to natural language instructions according to embodiments of the present invention.

### DETAILED DESCRIPTION

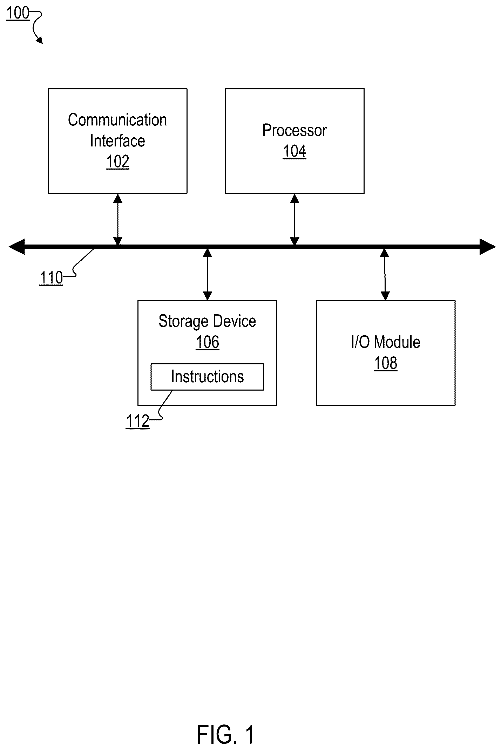

Example methods, apparatus, and products for generating multi-stage data analysis in response to natural language instructions in accordance with embodiments of the present disclosure are described with reference to the accompanying drawings, beginning with Figure 1. Figure 1 illustrates an exemplary computing device 100 that may be specifically configured to perform one or more of the processes described herein. As shown in Figure 1, computing device 100 may include a communication interface 102, a processor 104, a storage device 106, and an input/output ("I/O") module 108 communicatively connected one to another via a communication infrastructure 110. While an exemplary computing device 100 is shown in Figure 1, the components illustrated in Figure 1 are not intended to be limiting. Additional or alternative components may be used in other embodiments. Components of computing device 100 shown in Figure 1 will now be described in additional detail.

Communication interface 102 may be configured to communicate with one or more computing devices. Examples of communication interface 102 include, without limitation, a wired network interface (such as a network interface card), a wireless network interface (such as a wireless network interface card), a modem, an audio/video connection, and any other suitable interface.

Processor 104 generally represents any type or form of processing unit capable of processing data and/or interpreting, executing, and/or directing execution of one or more of the instructions, processes, and/or operations described herein. Processor 104 may perform operations by executing computer-executable instructions 112 (e.g., an application, software, code, and/or other executable data instance) stored in storage device 106.

Storage device 106 may include one or more data storage media, devices, or configurations and may employ any type, form, and combination of data storage media and/or device. For example, storage device 106 may include, but is not limited to, any combination of non-volatile media and/or volatile media. Electronic data, including data described herein, may be temporarily and/or permanently stored in storage device 106. For example, data representative of computer-executable instructions 112 configured to direct processor 104 to perform any of the operations described herein may be stored within storage device 106. In some examples, data may be arranged in one or more databases residing within storage device 106.

I/O module 108 may include one or more I/O modules configured to receive user input and provide user output. I/O module 108 may include any hardware, firmware, software, or combination thereof supportive of input and output capabilities. For example, I/O module 108 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 108 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 108 is configured to provide graphical data to a display for presentation to a user. The graphical data may be representative of one or more graphical user interfaces and/or any other graphical content as may serve a particular implementation. In some examples, any of the systems, computing devices, and/or other components described herein may be implemented by computing device 100.

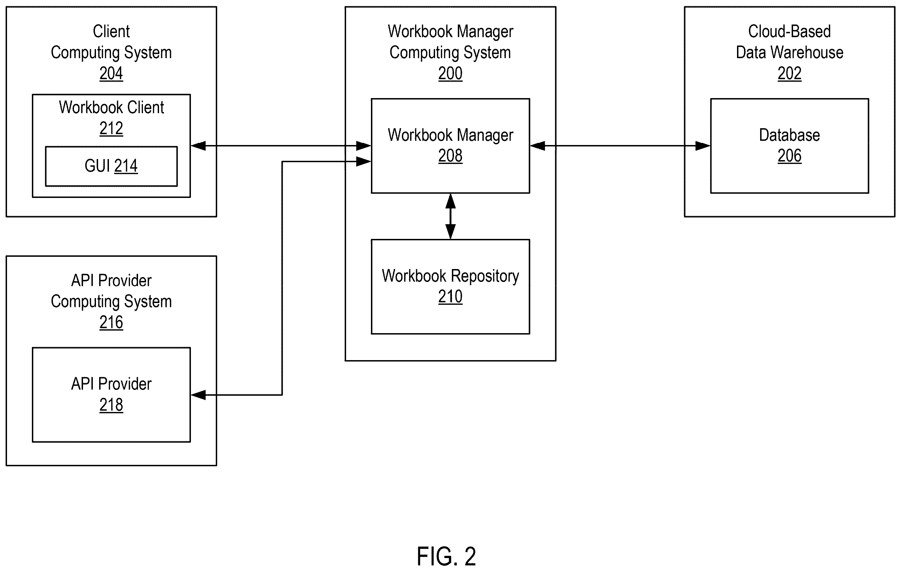

For further explanation, Figure 2 illustrates a block diagram depicting an exemplary system for generating multi-stage data analysis in response to natural language instructions according to embodiments of the present invention. As shown in Figure 2, the system includes a workbook manager computing system 200, a cloud-based data warehouse 202, a client computing system 204, and an API provider computing system 216. The workbook manager computing system 200 includes a workbook manager 208 and a workbook repository 210. The client computing system 204 includes a workbook client 212 with a graphical user interface (GUI) 214. The cloud-based data warehouse 202 includes a database 206. The API provider computing system 216 includes an API provider 218.

The workbook manager 208 is hardware, software, or an aggregation of hardware and software configured to present a dataset within a workbook on a client computing system 204 via the workbook client 212. The workbook manager 208 uses the dataset to retrieve data from the database 206 by issuing a database statement to the cloud-based data warehouse 202 requesting the data. In response, the cloud-based data warehouse 202 sends query results including the data to the workbook manager 208. Once the query results are received, the data is then organized according to the dataset and workbook metadata to generate the workbook. The workbook is then sent to a workbook client 212 on the client computing system 204 for presentation to a user. The workbook manager 208 may reside on the workbook manager computing system 200, which is an intermediary computing system between each client computing system and the cloud-based data warehouse 202.

The cloud-based data warehouse 202 stores and manages user data on behalf of the user. The user (*e.g*., via the client computing system 204) accesses the data via the workbook manager 208, which organizes and analyzes the data as datasets within a workbook. The workbook manager 208 may access the user data from the cloud-based data warehouse 202 using credentials supplied by the user.

A workbook is a presentation of data from a cloud-based data warehouse 202 (e.g., using one or workbook elements). To present data from the cloud-based data warehouse 202, the data is retrieved from the database 206 (*e.g.,* using a database statement) and organized using a dataset. A dataset is a collection of information that resides on the workbook manager computing system 200 that includes instructions for the retrieval and organization of data from the cloud-based data warehouse 202. The dataset may include, for example, a network location of the cloud-based data warehouse 202, a structure in which to organize the data, and formulas or other data points to be included with the data. When the workbook is being presented, the dataset also includes the data retrieved from the cloud-based data warehouse. A workbook may include one or more workbook elements. Each workbook element includes a collection of graphical elements and organizing mechanism for a dataset or portion of a dataset. Workbooks may be stored in the workbook repository 210. Workbooks are described in further detail below.

The workbook client 212 is a part of the workbook manager 208 and works in concert with the workbook manager 208 to present a workbook on a client computing system 204. The workbook client 212 may perform local processing of changes made to the workbook and/or the dataset. The workbook client 212 may be an application executing within a web browser. The workbook client 212 may be part of an Internet application that includes the workbook manager 208 and is hosted on the workbook manager computing system 200.

The GUI 214 is a visual presentation configured to present workbooks to a user. The GUI 214 may present a mechanism by which a user can manipulate and effect change to the workbook in the form of a workbook edit. The GUI 214 may be displayed on client computing system 204 (*e.g.,* on a system display or mobile touchscreen).

The database 206 is a collection of data and a management system for the data. Data may be organized into columns and rows (also referred to as records). The particular columns, rows, and organization of the columns and rows that make up data may be specified in the database statement requesting the data. Data may be sent from the cloud-based data warehouse 202 in response to a database statement (also referred to as a query). Accordingly, data retrieved in response to a database statement may be referred to as query results. The database statement may be a structured query language statement.

The workbook manager 208 and workbook clients 212a, 212b may exchange information using state specifications. A state specification is a collection of data describing inputs into the GUI 214. The state specification may include manipulations of GUI elements within the GUI 214 along with data entered into the GUI 214 by a user of the client computing system 204. Such manipulations and data may indicate requests for and manipulations of data and or workbooks. Such manipulations and data may also indicate requests to edit an existing row or create a new row and values for that row. The state specification may be a standard file format used to exchange data in asynchronous browser-server communication. For example, the state specification may be a JavaScript Object Notation specification. The state specification may also include descriptions of elements that are used to apply changes to the data and/or workbooks. Such elements may include filters applied to an element of the workbook, the hierarchical level of an element of the workbook, joins performed within an element of the workbook, exposable parameters in an element of the workbook, and security for the workbook.

The workbook manager 208 may use the state specification as input to compile a database statement. This database statement generation process may include a number of intermediate forms. For example, the database statement generation process may begin with state specification being converted into an abstract syntax tree. The abstract syntax tree may then be canonicalized into a canonicalized hierarchy. The canonicalized hierarchy may then be linearized into the workbook algebra. The workbook algebra may then be lowered into a relational algebra, which may then be lowered into the database statement.

The API (application programming interface) provider computing system 216 is a computing system or group of computing systems hosting the API provider 218. The API provider 218 is an aggregation of hardware and software that provides API results in response to an API call from another system (*e.g*., the workbook manager 208). The API provider 218 may be a large language model (LLM) that receives prompts as API calls.

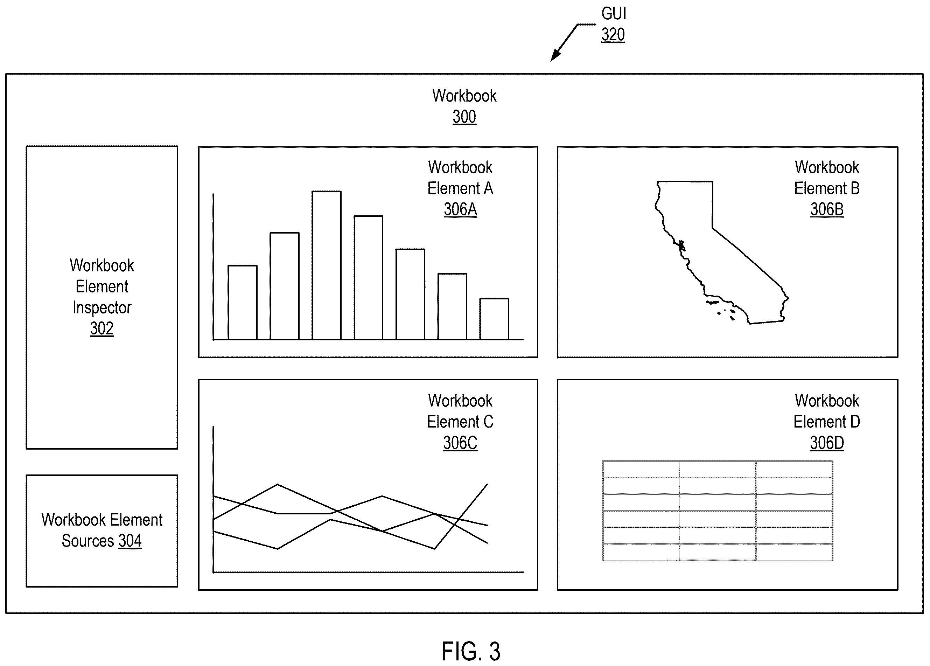

Figure 3 shows an exemplary GUI for generating multi-stage data analysis in response to natural language instructions according to embodiments of the present invention. As shown in Figure 3, the exemplary GUI 320 includes a workbook 300. The workbook 300 includes a workbook element inspector 302, workbook element sources 304, and four workbook elements (workbook element A 306A, workbook element B 306B, workbook element C 306C, workbook element D 306D). The GUI 320 may be the interface presented on GUI 214 of Figure 2.

The workbook 300 is a collection of graphical elements and organizing mechanism for a dataset. The workbook may present a dataset with data retrieved by the workbook manager from a cloud-based data warehouse. The dataset may then be organized based on the workbook metadata retrieved from the workbook repository. As shown in Figure 3, the workbook 300 includes four workbook elements. Workbook element A 306A presents a bar graph, workbook element B 306B presents a map, workbook element C 306C presents a line graph, and workbook element D 306D presents a spreadsheet structure. Other types of workbook elements exist beyond the examples shown in Figure 3. Some workbook elements (such as workbook element A 306A, workbook element B 306B, and workbook element C 306C) are visualizations. Visualizations are graphical elements that convey relationships between data in the dataset. Visualizations may include, for example, graphs, charts, or maps. Spreadsheet structures are a presentation of a dataset (such as a table) from a database on a cloud-based data warehouse. The spreadsheet structure displays rows of data organized by columns. The columns delineate different categories of the data in each row. One or more columns may be calculation columns that include calculation results using other columns in the spreadsheet structure based on a formula received from the user. Both visualizations and the spreadsheet structures may include dynamic elements and be configured to interact with a user using the client computing system 204 via the GUI 320. Each workbook element (workbook element A 306A, workbook element B 306B, workbook element C 306C, workbook element D 306D) may use a dataset unique to that workbook element or use a dataset shared by at least one other workbook element.

The workbook element inspector 302 is a mechanism by which a user may configure each workbook element. The workbook element inspector 302 may include a mechanism to define and organize hierarchical relationships between the columns of a spreadsheet structure. The term "hierarchical relationship" refers to subordinate and superior groupings of columns. For example, a database may include rows for an address book, and columns for state, county, city, and street. A dataset from the database may be grouped first by state, then by county, and then by city. Accordingly, the state column would be at the highest level in the hierarchical relationship, the county column would be in the second level in the hierarchical relationship, and the city column would be at the lowest level in the hierarchical relationship.

The workbook element sources 304 presents the user with the primary and any secondary sources (such as datasets) for the selected workbook element. The workbook element sources 304 may also include a mechanism for a user to request and configure a dataset from a database to be presented as a workbook element in a workbook 300. Such a mechanism may be part of the interactivity of the workbook 300. Specifically, a user may manipulate a workbook (*e.g*., by dragging and dropping columns or rows, resorting columns or rows, manipulating a graph etc.) and, in response, the GUI 320 may generate a request (*e.g*., in the form of a state specification) for a dataset and send the request to the workbook manager. Such a mechanism may also include a direct identification of the rows and columns of a database table that a user would like to access (*e.g*., via a selection of the rows and columns in a dialog box). The GUI 320 may also include a mechanism for a user to create a new table on the database, add rows to a table, and move rows within the table.

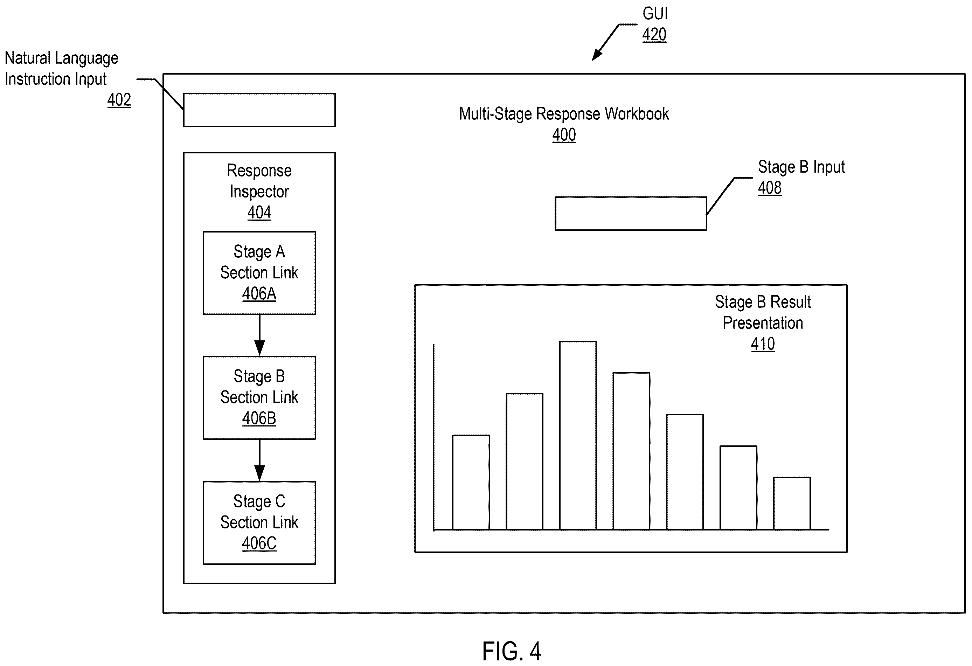

Figure 4 shows an exemplary GUI for generating multi-stage data analysis in response to natural language instructions according to embodiments of the present invention. As shown in Figure 4, the exemplary GUI 420 includes a multi-stage response workbook 400. The multi-stage response workbook 400 includes a natural language instruction input 402, a response inspector 404, a stage B input 408, and a stage B result presentation 410. The response inspector 404 includes stage A section link 406A, stage B section link 406B, and stage C section link 406C. The GUI 420 may be the interface presented on GUI 214 of Figure 2. The multi-stage response workbook 400 depicted in Figure 4 shows the state of the multi-stage response workbook 400 after a user has entered an instruction into the natural language instruction input 402, received a multi-stage response, and activated the stage B section link 406B. Because the stage B section link 406B has been activated, the user is presented with the stage B input 408 and the stage B result 410.

The natural language instruction input 402 is a mechanism for the user to enter a natural language instruction. A natural language instruction is an instruction constructed using human written communications patterns and disregarding any computer-based syntax. The natural language instruction may describe the desired response. Due to limitations of API providers and ambiguity inherent in natural language instructions, responses to natural language instructions are frequently not the responses desired by the user generating the natural language instruction. Embodiments of the present invention address this problem by visually presenting the steps (or stages) undertaken by the workbook manager to generate a response to the natural language instruction. Instead of only presenting the final response to the natural language instruction input 402, the workbook manager 208 presents each stage of the response generation. By presenting each stage to the user, the user may verify the veracity of the generated response. Further, if the generated response is not what the user intended, the user may adjust the inputs at each stage to guide the workbook manager and API provider toward the desired response.

The response inspector 404 is a mechanism that allows a user to select a particular stage from the group of stage section links (stage A section link 406A, stage B section link 406B, and stage C section link 406C). The response inspector 404 presents the stage section links as a flowchart or mapping of the generated response. Each stage section link (stage A section link 406A, stage B section link 406B, and stage C section link 406C) may include a brief description of the action being taken (*e.g*., "selecting a data source", "calculating a new column"). Upon activating the stage section link (stage A section link 406A, stage B section link 406B, and stage C section link 406C) a user is presented with the inputs for that stage (*e.g*., stage B input 408) and the result for that stage (*e.g*., stage B result presentation 410).

In order to generate a final response to a natural language instruction, the workbook manager may use a stage agent. A stage agent is mechanism that includes a group of steps for responding to a particular type of inquiry. The group of stages in each stage agent are used to respond a request for a particular analysis on the data in the cloud-based data warehouse. Each stage agent may be static code or an executing process that provides information on how to process inputs for each stage and the expected output for each stage. A particular stage agent may be selected based on a determination of the type of query described by the natural language instruction. For example, for the natural language instruction "how many widgets were sold between 2008 and 2018", the stage agent for data collation may be selected. Such a stage agent may include the stages of "select a table with the necessary data", "create a new calculation column", "generate a chart", and "extract the final response". There may be any number of stages to generate the response to the natural language instruction.

Each stage in the stage agent includes at least one operation to apply to the stage inputs to obtain the stage results. The workbook manager may send the operation and the stage inputs together in an API call to the API provider and, in response, receive API results. The API results include sufficient information for the workbook manager to generate the stage result. Such information may include the stage result itself. Such information may include data from the cloud-based data warehouse, such as a selection from a group of tables or columns. Alternatively, the API results may include a database statement (or a description of a database statement). If a database statement is received, then the database statement may then be used to retrieve the stage result from a database on the cloud-based data warehouse. If a description of a database statement is received, then the workbook manager uses the description of the database statement to generate the database statement before using the generated database statement to retrieve the stage result from a database on the cloud-based data warehouse.

Each stage includes at least two elements: stage inputs (*e.g*., stage B input 408) and a stage result presentation (*e.g.,* stage B result 410). The stage inputs (*e.g.,* stage B input 408) are a mechanism that presents the input or inputs used to generate the stage result. For example, one stage may be the selection of a table from a database on the cloud-based data warehouse. The corresponding stage input may present the name of the table that was selected and the stage result presentation may present rows from the selected table. The stage inputs (*e.g*., stage B input 408) may be presented in an editable format allowing a user to alter the stage inputs that are used by the workbook manager to generate the stage result.

The stage result presentation (*e.g*., stage B result presentation 410) is a presentation of the stage result. The stage result is an intermediate or final outcome of the stage inputs manipulated according to the stage agent. The stage result presentation (*e.g*., stage B result presentation 410) may include one or more workbook elements that present at least a portion of a dataset from the cloud-based data warehouse. The final stage result presents a response to the natural language instruction and may include a data visualization using the data from the cloud-based data warehouse.

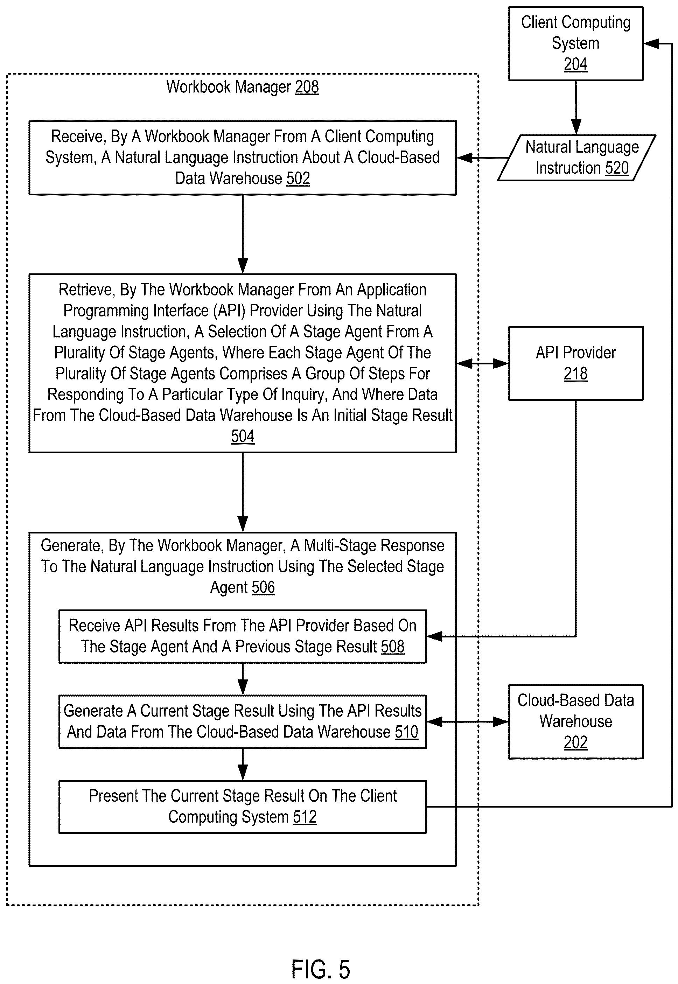

For further explanation, Figure 5 sets forth a flow chart illustrating an exemplary method for generating multi-stage data analysis in response to natural language instructions according to embodiments of the present invention. The method of Figure 5 includes receiving 502, by a workbook manager 208 from a client computing system 204, a natural language instruction 520 about a cloud-based data warehouse 202. In one or more embodiments, receiving 502 the natural language instruction 520 is carried out by the workbook manager 208 detecting that a user has entered text into the input for the natural language instruction.

The method of Figure 5 also includes retrieving 504, by the workbook manager 208 from an application programming interface (API) provider 218 using the natural language instruction 520, a selection of a stage agent from a plurality of stage agents, wherein each stage agent of the plurality of stage agents comprises a group of steps for responding to a particular type of inquiry, and wherein data from the cloud-based data warehouse 202 is an initial stage result. In one or more embodiments, retrieving 504 the selection of a stage agent from a plurality of stage agents is carried out by sending the natural language instruction 520 and a plurality of stage agents to the API provider 218; and receiving, from the API provider 218, the selection of the stage agent from the plurality of stage agents. If the natural language instruction is determined by the workbook manager 208 or the API provider 218 to be unresolvable, then the workbook manager 208 may generate an error and present the error to the user of the client computing system 204.

The method of Figure 5 also includes generating 506, by the workbook manager 208, a multi-stage response to the natural language instruction 520 using the selected stage agent. In one or more embodiments, generating 506 a multi-stage response to the natural language instruction 520 using the selected stage agent is carried out by receiving 508 API results from the API provider 218 based on the stage agent and a previous stage result; generating 510 a current stage result using the API results and data from the cloud-based data warehouse 202; and presenting 512 the current stage result on the client computing system 204. The receiving 508, generating 510, and presenting 512 steps above may be performed for each stage of the selected stage agent to generate the final stage result.

For the initial stage, the workbook manager 208 uses data from the cloud-based data warehouse (the initial stage result) as the previous stage result. An initial stage result (or initial stage data) is data used as an initial input for the first stage of the multi-stage response. Data from the cloud-based data warehouse may include records, values, rows, etc. (and aggregations of data) from one or more tables within a database on the cloud-based data warehouse 202. Data from the cloud-based data warehouse may also include metadata about the tables and databases on the cloud-based data warehouse 202, including column names, table names, administrative data, etc.

In one or more embodiments, receiving 508 API results from the API provider 218 based on the stage agent and a previous stage result is carried out by the workbook manager sending the previous stage results and the current stage operation or operations to the API provider 218 in an API call. In response, the API provider 218 sends the API results to the workbook manager 208. The previous stage result may be any previous stage result, not necessarily the most recent stage result. If there is no previous stage (*i.e.,* this is the first stage of the selected stage agent), then the workbook manager 208 may use an initial stage result with the first stage operation to generate the API call to the API provider 218.

A user or administrator may configure the workbook manager 208 to allow or prevent certain data or metadata from the cloud-based data warehouse 202 to be sent to the API provider 218. Specifically, the workbook manager 208 may provide a setting with which the user or administrator may select which databases, tables, columns, or other data is accessible by the API provider 218 or may be sent to the API provider 218 in an API call.

The API calls to the API provider 218 may include a subset of the data in a table, such as the first few rows of the table. Further, the API provider 218 may be sent default configurations for the API results along with other information in the API calls. For example, the default configurations may indicate that absent a timeline provided in the natural language instruction, the most recent time period should be used.

The API provider 218 may be primed with the default configurations, accessible data warehouse information, or other information relevant for responding to the natural language instruction 520. Specifically, the workbook manager 208 (or another entity on behalf of the workbook manager 208) may provide certain information to the API provider 218 for a number of iterations before prompting with the natural language instruction. The API provider 218 may be primed with, for example, a plurality of stage agents, a database description for the databases to which the user has access, and default configurations for API results.

In one or more embodiments, generating 510 a current stage result using the API results and data from the cloud-based data warehouse 202 is carried out by the workbook manager converting the API results and any additional data from the cloud-based data warehouse into the current stage result. As discussed above, the API results alone may be sufficient to generate the current stage result. Alternatively, the API results include instructions for generating the current stage result using data in the cloud-based data warehouse 202. Such instructions may be in the form of a database statement.

In one or more embodiments, presenting 512 the current stage result on the client computing system 204 is carried out by converting the current stage result into a workbook element such as a data visualization or spreadsheet structure. The presented workbook elements present at least a portion of a dataset from the cloud-based data warehouse 202. The final stage of the multi-stage response presents a response to the natural language instruction. Further, like the previous stages, the final stage result may present a data visualization using the data from the cloud-based data warehouse.

Consider the following example. A clothing company employee, using the client computing system 204, navigates to the multi-stage response workbook and enters, into the natural language instruction input, "How many dark-colored shirts were sold in North America last year?" The workbook manager 208 receives the natural language instruction and generates an API call to the API provider. The API call includes the natural language instruction and a group of stage agents. In response, the workbook manager receives an API result that includes the selection of a stage agent for data aggregation.

The workbook manager then uses the data aggregation stage agent to generate the multi-stage response to the question "How many dark-colored shirts were sold in North America last year?" The workbook manager then generates an API call using the initial stage operation from the data aggregation stage agent and data from the cloud-based data warehouse 202. Assume that the initial stage operation is to select a table from the data warehouse 202. The API call is generated using a list of tables and columns stored on the database in the cloud-based data warehouse 202. In response, the workbook manager 208 receives API results from the API provider that include the selection of a table titled "units_sold_2023" and includes columns for "retail location", "date", "item description", "color", and "number sold". Based on the selected table from the API results, the workbook manager 208 accesses the table on the cloud-based data warehouse and presents the table as the first stage results (although only a portion of the table will be presented).

Assume the second stage is to determine the relevant rows in the table to generate the response. This requires a determination of which retail locations are in North America and which colors are considered dark. The workbook manager 208 sends a list of the unique retail locations in the retail location column and a request to identify the retail locations in North America. The workbook manager 208 also sends a list of the unique colors from the color column and a request to identify the colors that would be considered dark colors. In response, the workbook manager 208 receives a list of the values from the retail location column that are in North America and a list of the values from the color column that are dark colored. The workbook manager 208 may then present the units_sold_2023 table filtered to include only the rows that have both a retail location in North America and a color that matches a dark color.

Assume the third stage is to create a workbook element that includes the response to the natural language instruction 520. To determine the appropriate type of workbook element, the workbook manager 208 sends the natural language instruction and the list of columns in the units_sold_2023 table. In response, the API provider 218 sends API results indicating that the most appropriate workbook element to respond to the natural language instruction is a pivot table that aggregates the number sold column for the relevant rows. The workbook manager then generates a pivot table from the units_sold_2023 table that presents the total number of dark-colored shirts sold in North America in 2023. The workbook manager 208 then presents the pivot table to the user and includes an additional text box with the numerical answer to the question "How many dark-colored shirts were sold in North America last year?"

The above steps improve the operation of the computer system by using multi-stage responses to natural language queries about data stored in data warehouses. This allows a user to view each stage used in generating an answer and to verify that the response was generated using the appropriate data and methods. This is accomplished by having an API provider select a stage agent most suitable for a given natural language instruction and displaying the output for each stage to a user before presenting the final response to the natural language instruction.

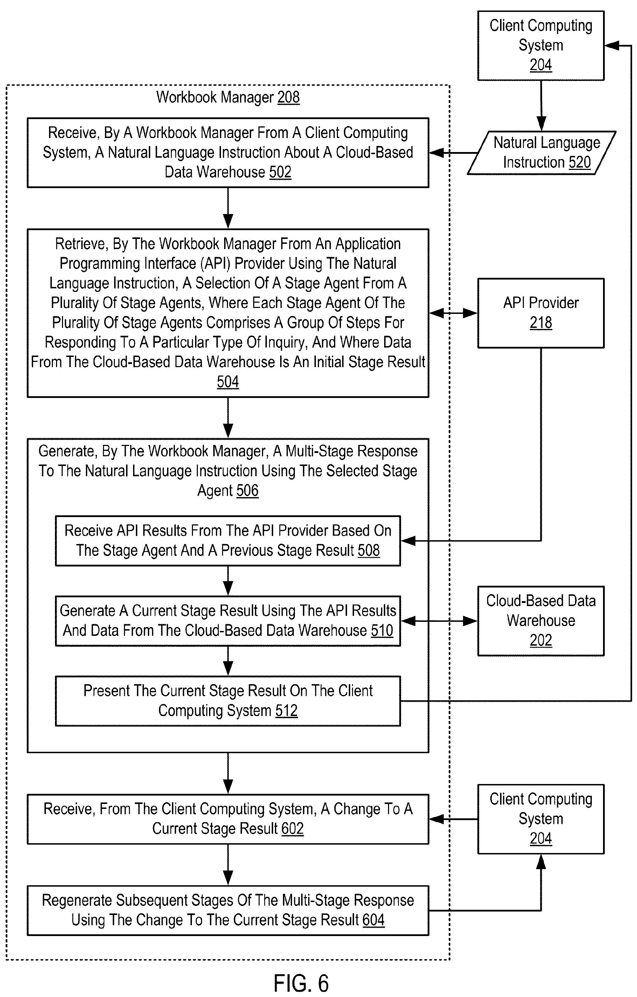

For further explanation, Figure 6 sets forth a flow chart illustrating a further exemplary method for generating multi-stage data analysis in response to natural language instructions according to embodiments of the present invention that includes receiving 502, by a workbook manager 208 from a client computing system 204, a natural language instruction 520 about a cloud-based data warehouse 202; retrieving 504, by the workbook manager 208 from an application programming interface (API) provider 218 using the natural language instruction 520, a selection of a stage agent from a plurality of stage agents, wherein each stage agent of the plurality of stage agents comprises a group of steps for responding to a particular type of inquiry, and wherein data from the cloud-based data warehouse 202 is an initial stage result; and generating 506, by the workbook manager 208, a multi-stage response to the natural language instruction 520 using the selected stage agent, including, for each stage of the multi-stage response: receiving 508 API results from the API provider 218 based on the stage agent and a previous stage result; generating 510 a current stage result using the API results and data from the cloud-based data warehouse 202; and presenting 512 the current stage result on the client computing system 204.

The method of Figure 6 differs from the method of Figure 5, however, in that the method of Figure 6 further includes receiving 602, from the client computing system 204, a change to a current stage result; and regenerating 604 subsequent stages of the multi-stage response using the change to the current stage result. In one or more embodiments, receiving 602, from the client computing system 204, a change to a current stage result is carried out by the workbook manager 208 detecting that a user of the client computing system 204 has initiated an edit to a stage input at a particular stage in the multi-stage response presentation. The edit may be, for example, an adjustment to the operation for the particular stage, the inclusion or exclusion of rows or columns with data matching a particular value, a change of table for use in generating the response, or a change to the natural language input.

Continuing with the example from above, assume that the user sees that during the second stage, the color orange was classified as a dark color by the API provider 218. The user may select the color orange in the presented table or in a stage input and indicate that the color orange should not be included in the dark colors.

In one or more embodiments, regenerating 604 subsequent stages of the multi-stage response using the change to the current stage result is carried out by executing the edited stage and each stage thereafter with the received edit in place. Regenerating 604 subsequent stages of the multi-stage response may result in a change to the final response to the natural language instruction 520.

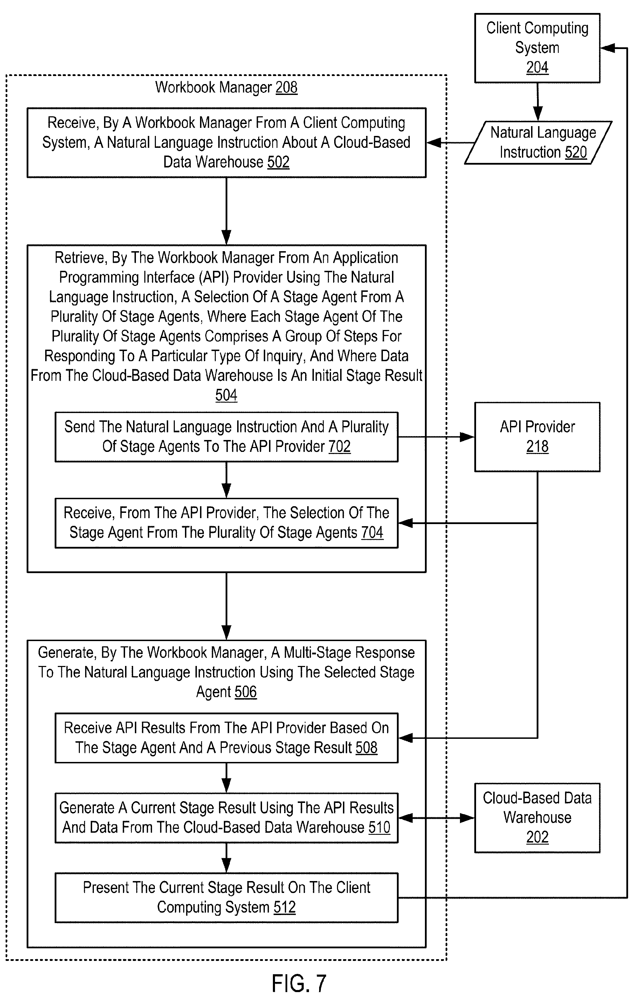

For further explanation, Figure 7 sets forth a flow chart illustrating a further exemplary method for generating multi-stage data analysis in response to natural language instructions according to embodiments of the present invention that includes receiving 502, by a workbook manager 208 from a client computing system 204, a natural language instruction 520 about a cloud-based data warehouse 202; retrieving 504, by the workbook manager 208 from an application programming interface (API) provider 218 using the natural language instruction 520, a selection of a stage agent from a plurality of stage agents, wherein each stage agent of the plurality of stage agents comprises a group of steps for responding to a particular type of inquiry, and wherein data from the cloud-based data warehouse 202 is an initial stage result; and generating 506, by the workbook manager 208, a multi-stage response to the natural language instruction 520 using the selected stage agent, including, for each stage of the multi-stage response: receiving 508 API results from the API provider 218 based on the stage agent and a previous stage result; generating 510 a current stage result using the API results and data from the cloud-based data warehouse 202; and presenting 512 the current stage result on the client computing system 204.

The method of Figure 7 differs from the method of Figure 5, however, in that retrieving 504 the selection of a stage agent from a plurality of stage agents and a selection of a table from a cloud-based data warehouse 202 includes sending 702 the natural language instruction 520 and a plurality of stage agents to the API provider 218; and receiving 704, from the API provider 218, the selection of the stage agent from the plurality of stage agents.

In one or more embodiments, sending 702 the natural language instruction 520 and a plurality of stage agents to the API provider 218 is carried out by generating an API call requesting the selection of the most appropriate stage agent for responding to the natural language instruction 520. The plurality of stage agents may be sent with the API call or the API provider 218 may be primed with the plurality of stage agents. The workbook manager 208 may also provide selection criteria for the API provider 218 to use in selecting the most appropriate stage agent. In one or more embodiments, receiving 704, from the API provider 218, the selection of the stage agent from the plurality of stage agents is carried out by the workbook manager 208 receiving API results indicating the selected stage agent. The workbook manager 208 may then access the selected stage agent and initiate the initial stage.

In view of the explanations set forth above, readers will recognize that the benefits of generating multi-stage data analysis in response to natural language instructions according to embodiments of the present invention include:
- Improving the operation of the computer system by presenting a response to a natural language instruction using multiple stages allowing a user to verify that each stage was performed appropriately, increasing system utility.

Exemplary embodiments of the present invention are described largely in the context of a fully functional computer system for generating multi-stage data analysis in response to natural language instructions. Readers of skill in the art will recognize, however, that the present invention also may be embodied in a computer program product disposed upon computer readable storage media for use with any suitable data processing system. Such computer readable storage media may be any storage medium for machine-readable information, including magnetic media, optical media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps of the method of the invention as embodied in a computer program product. Persons skilled in the art will recognize also that, although some of the exemplary embodiments described in this specification are oriented to software installed and executing on computer hardware, nevertheless, alternative embodiments implemented as firmware or as hardware are well within the scope of the present invention.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Advantages and features of the present disclosure can be further described by the following statements:
1. A method of receiving, by a workbook manager from a client computing system, a natural language instruction about a cloud-based data warehouse; retrieving, by the workbook manager from an application programming interface (API) provider using the natural language instruction, a selection of a stage agent from a plurality of stage agents, wherein each stage agent of the plurality of stage agents comprises a group of steps for responding to a particular type of inquiry, and wherein data from the cloud-based data warehouse is an initial stage result; and generating, by the workbook manager, a multi-stage response to the natural language instruction using the selected stage agent, including, for each stage of the multi-stage response: receiving API results from the API provider based on the stage agent and a previous stage result; generating a current stage result using the API results and data from the cloud-based data warehouse; and presenting the current stage result on the client computing system.
2. The method of statement 1, further comprising: receiving, from the client computing system, a change to a current stage result; and regenerating subsequent stages of the multi-stage response using the change to the current stage result.
3. The method of statement 2 or statement 1, wherein retrieving the selection of the stage agent from the plurality of stage agents comprises: sending the natural language instruction and a plurality of stage agents to the API provider; and receiving, from the API provider, the selection of the stage agent from the plurality of stage agents.
4. The method of statement 3, statement 2, or statement 1, wherein the data from the cloud-based data warehouse comprises table descriptions and columns without data from within tables.
5. The method of statement 4, statement 3, statement 2, or statement 1, wherein each stage result comprises a workbook element that presents at least a portion of a dataset from the cloud-based data warehouse.
6. The method of statement 5, statement 4, statement 3, statement 2, or statement 1, wherein a final stage result presents a response to the natural language instruction.
7. The method of statement 6, statement 5, statement 4, statement 3, statement 2, or statement 1, wherein a final stage result presents a data visualization using the data from the cloud-based data warehouse.
8. The method of statement 7, statement 6, statement 5, statement 4, statement 3, statement 2, or statement 1, wherein the API provider is primed using the plurality of stage agents.
9. The method of statement 8, statement 7, statement 6, statement 5, statement 4, statement 3, statement 2, or statement 1, wherein the group of steps in each stage agent of the plurality of stage agents are used to respond a request for a particular analysis on the data in the cloud-based data warehouse.
10. The method of statement 9, statement 8, statement 7, statement 6, statement 5, statement 4, statement 3, statement 2, or statement 1, wherein the API provider is a large language model.

It will be understood from the foregoing description that modifications and changes may be made in various embodiments of the present invention without departing from its true spirit. The descriptions in this specification are for purposes of illustration only and are not to be construed in a limiting sense. The scope of the present invention is limited only by the language of the following claims.

The present invention may be defined by the following clauses. It will be understood that the features recited are interchangeable defined by the following clauses and their dependencies. That is, the features of the clauses may be combined to define the present invention.

### Clauses:

1. A method comprising: receiving, by a workbook manager from a client computing system, a natural language instruction about a cloud-based data warehouse; retrieving, by the workbook manager from an application programming interface (API) provider using the natural language instruction, a selection of a stage agent from a plurality of stage agents, wherein each stage agent of the plurality of stage agents comprises a group of steps for responding to a particular type of inquiry, and wherein data from the cloud-based data warehouse is an initial stage result; and generating, by the workbook manager, a multi-stage response to the natural language instruction using the selected stage agent, including, for each stage of the multi-stage response: receiving API results from the API provider based on the stage agent and a previous stage result; generating a current stage result using the API results and data from the cloud-based data warehouse; and presenting the current stage result on the client computing system.
2. The method of clause 1, further comprising: receiving, from the client computing system, a change to a current stage result; and regenerating subsequent stages of the multi-stage response using the change to the current stage result.
3. The method of clause 1 or clause 2, wherein retrieving the selection of the stage agent from the plurality of stage agents comprises: sending the natural language instruction and a plurality of stage agents to the API provider; and receiving, from the API provider, the selection of the stage agent from the plurality of stage agents.
4. The method of any of clauses 1 to 3, wherein the data from the cloud-based data warehouse comprises table descriptions and columns without data from within tables.
5. The method of any of clauses 1 to 4, wherein each stage result comprises a workbook element that presents at least a portion of a dataset from the cloud-based data warehouse.
6. The method of any of clauses 1 to 5, wherein a final stage result presents a response to the natural language instruction.
7. The method of any of clauses 1 to 6, wherein a final stage result presents a data visualization using the data from the cloud-based data warehouse.
8. The method of any of clauses 1 to 7, wherein the API provider is primed using the plurality of stage agents.
9. The method of any of clauses 1 to 8, wherein the group of steps in each stage agent of the plurality of stage agents are used to respond a request for a particular analysis on the data in the cloud-based data warehouse.
10. The method of any of clauses 1 to 9, wherein the API provider is a large language model.
11. A system comprising: a memory; and a processing device, operatively coupled to the memory, the processing device configured to: receive, from a client computing system, a natural language instruction about a cloud-based data warehouse; retrieve, from an application programming interface (API) provider using the natural language instruction, a selection of a stage agent from a plurality of stage agents, wherein each stage agent of the plurality of stage agents comprises a group of steps for responding to a particular type of inquiry, and wherein data from the cloud-based data warehouse is an initial stage result; and generate a multi-stage response to the natural language instruction using the selected stage agent, including, for each stage of the multi-stage response: receiving API results from the API provider based on the stage agent and a previous stage result; generating a current stage result using the API results and data from the cloud-based data warehouse; and presenting the current stage result on the client computing system.
12. The system of clause 11, wherein the processing device is further configured to: receiving, from the client computing system, a change to a current stage result; and regenerating subsequent stages of the multi-stage response using the change to the current stage result.
13. The system of clause 11 or clause 12, wherein retrieving the selection of the stage agent from the plurality of stage agents comprises: sending the natural language instruction and a plurality of stage agents to the API provider; and receiving, from the API provider, the selection of the stage agent from the plurality of stage agents.
14. The system of any of clauses 11 to 13, wherein the data from the cloud-based data warehouse comprises table descriptions and columns without data from within tables.
15. The system of any of clauses 11 to 14, wherein each stage result comprises a workbook element that presents at least a portion of a dataset from the cloud-based data warehouse.
16. The system of any of clauses 11 to 15, wherein a final stage result presents a response to the natural language instruction.
17. The system of any of clauses 11 to 16, wherein a final stage result presents a data visualization using the data from the cloud-based data warehouse.
18. The system of any of clauses 11 to 17, wherein the API provider is primed using the plurality of stage agents.
19. The system of any of clauses 11 to 18, wherein the group of steps in each stage agent of the plurality of stage agents are used to respond a request for a particular analysis on the data in the cloud-based data warehouse.
20. A non-transitory computer readable storage medium storing instructions which, when executed, cause a processing device to: receive, from a client computing system, a natural language instruction about a cloud-based data warehouse; retrieve, from an application programming interface (API) provider using the natural language instruction, a selection of a stage agent from a plurality of stage agents, wherein each stage agent of the plurality of stage agents comprises a group of steps for responding to a particular type of inquiry, and wherein data from the cloud-based data warehouse is an initial stage result; and generate a multi-stage response to the natural language instruction using the selected stage agent, including, for each stage of the multi-stage response: receiving API results from the API provider based on the stage agent and a previous stage result; generating a current stage result using the API results and data from the cloud-based data warehouse; and presenting the current stage result on the client computing system.

## Claims

1. A method comprising:
receiving, by a workbook manager from a client computing system, a natural language instruction about a cloud-based data warehouse;
retrieving, by the workbook manager from an application programming interface (API) provider using the natural language instruction, a selection of a stage agent from a plurality of stage agents, wherein each stage agent of the plurality of stage agents comprises a group of steps for responding to a particular type of inquiry, and wherein data from the cloud-based data warehouse is an initial stage result; and
generating, by the workbook manager, a multi-stage response to the natural language instruction using the selected stage agent, including, for each stage of the multi-stage response:
receiving API results from the API provider based on the stage agent and a previous stage result;
generating a current stage result using the API results and data from the cloud-based data warehouse; and
presenting the current stage result on the client computing system.

2. The method of claim 1, further comprising:
receiving, from the client computing system, a change to a current stage result; and
regenerating subsequent stages of the multi-stage response using the change to the current stage result.

3. The method of claim 1 or claim 2, wherein retrieving the selection of the stage agent from the plurality of stage agents comprises:
sending the natural language instruction and a plurality of stage agents to the API provider; and
receiving, from the API provider, the selection of the stage agent from the plurality of stage agents.

4. The method of any of claims 1 to 3, wherein the data from the cloud-based data warehouse comprises table descriptions and columns without data from within tables.

5. The method of any of claims 1 to 4, wherein each stage result comprises a workbook element that presents at least a portion of a dataset from the cloud-based data warehouse.

6. The method of any of claims 1 to 5, wherein a final stage result presents a response to the natural language instruction.

7. The method of any of claims 1 to 6, wherein a final stage result presents a data visualization using the data from the cloud-based data warehouse.

8. The method of any of claims 1 to 7, wherein the API provider is primed using the plurality of stage agents.

9. The method of any of claims 1 to 8, wherein the group of steps in each stage agent of the plurality of stage agents are used to respond a request for a particular analysis on the data in the cloud-based data warehouse.

10. The method of any of claims 1 to 9, wherein the API provider is a large language model.

11. A system comprising:
a memory; and
a processing device, operatively coupled to the memory, the processing device configured to:
receive, from a client computing system, a natural language instruction about a cloud-based data warehouse;
retrieve, from an application programming interface (API) provider using the natural language instruction, a selection of a stage agent from a plurality of stage agents, wherein each stage agent of the plurality of stage agents comprises a group of steps for responding to a particular type of inquiry, and wherein data from the cloud-based data warehouse is an initial stage result; and
generate a multi-stage response to the natural language instruction using the selected stage agent, including, for each stage of the multi-stage response:
receiving API results from the API provider based on the stage agent and a previous stage result;
generating a current stage result using the API results and data from the cloud-based data warehouse; and
presenting the current stage result on the client computing system.

12. The system of claim 11, wherein the processing device is further configured to:
receiving, from the client computing system, a change to a current stage result; and
regenerating subsequent stages of the multi-stage response using the change to the current stage result; optionally wherein retrieving the selection of the stage agent from the plurality of stage agents comprises:
sending the natural language instruction and a plurality of stage agents to the API provider; and
receiving, from the API provider, the selection of the stage agent from the plurality of stage agents.

13. The system of claim 11, wherein the data from the cloud-based data warehouse comprises table descriptions and columns without data from within tables; optionally wherein each stage result comprises a workbook element that presents at least a portion of a dataset from the cloud-based data warehouse.

14. The system of claim 11, wherein a final stage result presents a response to the natural language instruction; optionally, wherein a final stage result presents a data visualization using the data from the cloud-based data warehouse; optionally wherein the API provider is primed using the plurality of stage agents; and optionally wherein the group of steps in each stage agent of the plurality of stage agents are used to respond a request for a particular analysis on the data in the cloud-based data warehouse.

15. A non-transitory computer readable storage medium storing instructions which, when executed, cause a processing device to:
receive, from a client computing system, a natural language instruction about a cloud-based data warehouse;
retrieve, from an application programming interface (API) provider using the natural language instruction, a selection of a stage agent from a plurality of stage agents, wherein each stage agent of the plurality of stage agents comprises a group of steps for responding to a particular type of inquiry, and wherein data from the cloud-based data warehouse is an initial stage result; and
generate a multi-stage response to the natural language instruction using the selected stage agent, including, for each stage of the multi-stage response:
receiving API results from the API provider based on the stage agent and a previous stage result;
generating a current stage result using the API results and data from the cloud-based data warehouse; and
presenting the current stage result on the client computing system.
